# EUROPÄISCHE PATENTSCHRIFT

(11) **EP 1 696 738 B1**
(45) Veröffentlichungstag und Bekanntmachung des Hinweises auf die Patenterteilung: **14.05.2008**
(21) Anmeldenummer: 04803656.0
(22) Anmeldetag: 09.12.2004
(51) Int. Cl.: A23L 1/00

(54) **VERFAHREN UND MITTEL FUR DIE OBERFLACHENBEHANDLUNG VON LEBENSMITTELN**
METHOD AND MEANS FOR TREATING THE SURFACE OF FOOD PRODUCTS
PROCEDE ET AGENTS POUR LE TRAITEMENT DE SURFACE DE DENREES ALIMENTAIRES

(30) Priorität: 18.12.2003 US 530409 P
(43) Veröffentlichungstag der Anmeldung: 06.09.2006
(73) Patentinhaber: BASF SE, 67056 Ludwigshafen (DE)
(72) Erfinder: KRÄMER, Klaus, 76829 Landau (DE); KOLTER, Karl, 67117 Limburgerhof (DE); WOOLF, Herbert, Dennis, Easton, PA 18040 (US)
(86) Internationale Anmeldenummer: PCT/EP2004/013992
(87) Internationale Veröffentlichungsnummer: WO 2005/055741

(56) Entgegenhaltungen:
- WO-A-01/04195
- WO-A-03/070224
- US-A- 6 162 475
- US-A- 6 165 529

## Beschreibung

Die Erfindung betrifft Oberflächenbehandlungsmittel für Lebensmittel, ein entsprechendes Verfahren und die Verwendung von Mischungen von Polyvinylalkohol-Polyether-Pfropfcopolymeren (PVA-PEG-Pfropfcopolymere) mit Polyvinylacetaten für die Oberflächenbehandlung von Lebensmitteln, um deren Qualität und Aussehen zu verbessern und insbesondere ihre Haltbarkeit (Shelf-life) u.a. durch Beeinflussung des Reifeprozesses zu verlängern, sowie entsprechend beschichtete Lebensmittel.

Die größten Verluste von Lebensmitteln, insbesondere von frischem Obst und Gemüse, entstehen zwischen Ernte und Verzehr. Lebensmittel Coating ist eine Methode, um Obst und Gemüse sowie verarbeitete Lebensmittel länger frisch zu halten sowie vor chemischer und mikrobieller Kontamination und/oder oxidativem Verderb zu schützen. Früchte und Gemüse sollen dabei auch vor dem Austrocknen bewahrt werden. Kontaminierte Lebensmittel tragen durch toxische Substanzen sowie bakterielle bzw. virale Infektionen zu einem beträchtlichen Anteil zur Morbidität und Mortalität in der Bevölkerung bei.
Oxidative Veränderungen von Lebensmitteln führen u.a. zum Verlust ihrer organoleptischen Eigenschaften, dem Ranzigwerden von Fetten sowie den Abbau von essentiellen Nährstoffen. Dadurch werden Geschmack, Geruch und Farbe negativ beeinflusst, potentiell toxische Lipidperoxidationsprodukte gebildet und Vitamine abgebaut. Beispiele dafür sind die nichtenzymatische Bräunung von angeschnittenem Obst (Äpfel, Bananen) durch die Aktivierung von Polyphenoloxidasen und der oxidative Abbau von farbgebenden Carotinoiden sowie photooxidative Veränderungen von Lipiden und Proteinen durch das endogen vorkommende Vitamin Riboflavin (Lichtgeschmack).

Zusätzlich ist auch eine mechanische Stabilisierung der Oberflächen von Lebensmitteln in vielerlei Hinsicht wünschenswert.

Risse an der Oberfläche des Lebensmittels beeinträchtigen nicht nur das optische Erscheinungsbild, sondern bergen ebenfalls das Risiko des Eindringens von Mikroorganismen.

Besondere Probleme treten zum Beispiel beim Gebrauch von Eiern auf. Eier sind an der Schalenoberfläche häufig durch Mikroorganismen, vor allem Salmonellen, kontaminiert. Beim Aufschlagen der rohen Eier gelangen häufig Teile der Schale und damit auch die Mikroorganismen in die Eimasse. Da für die Herstellung einer Vielzahl von eihaltigen Speisen keine Erhitzung erfolgt, kann es zu einer massenhaften Vermehrung der Mikroorganismen kommen. Aber auch schon beim reinen Anfassen von kontaminierten Eiern können Mikroben über die Hände weiter verbreitet werden. Deshalb ist normalerweise beim Umgang mit Eiern häufiges Händewaschen erforderlich.

Bei relativ trockenen Backwaren wie z.B. Keksen besteht weiterhin das Problem der übermäßigen Krümelbildung durch Austrocknung.

Insgesamt gesehen besteht also ein großer Bedarf, Lebensmittel gegen schädigende Umwelteinflüsse zu schützen.

Obst wie Äpfel, Birnen und Bananen werden im allgemeinen zur Haltbarmachung unter kontrollierter bzw. modifizierter Atmosphäre eingelagert. Die Behandlung dieser Lebensmittel mit einem Oberflächenbehandlungsmittel (Coating) stellt eine alternative Technologie dazu dar, mit der Respiration und Austrockung sowie der mikrobielle Verderb reduziert werden können und damit die Haltbarkeit verlängert wird. Allerdings ist das erfolgreiche Coating von frischem Obst und Gemüse von der internen Gaszusammensetzung abhängig, da ansonsten sog. Off-flavors (Fehlgeschmack/-geruch) entstehen, wie HJ Park in einer Übersichtsarbeit darlegt (HJ Park. Development of advanced edible coating for fruits. Trends Food Sci Technol 10: 254-260, 1999).

Wachse wurden bereits im 12. und 13. Jahrhundert als erste essbare Coatingmaterialien für Früchte verwendet.

Zahlreiche andere zur Filmbildung befähigte Polymere sind als Überzugsmittel für Lebensmittel bekannt. Dazu gehören neben den Wachsen feste Fette, Kohlenhydrate und Proteine, und sowie Harze und synthetische Polymere. Beispiele für Kohlenhydrate sind Cellulosen wie Carboxymethylcellulose und Hydroxypropylcellulose, Stärken, Pektine, Alginate, Guar, Carrageen, Johannisbrotkernmehl, Chitosan, Pullulane und Xanthane. Derzeit verwendete Proteine sind Caseinate, Molkenproteine, Keratine, Collagene, Sojaproteinisolate und Zein. Wachse beinhalten Bienenwachs, Polycosanole, und Carnaubawachs. Schellack ist das einzige Lebensmittel-geeignete Harz. Letzteres wird durch den Saugstich des Weibchens der Lackschildlaus *Tachardia lacca* in die Zweige verschiedener Bäume u.a. in Indien und Thailand erzeugt. Durch den Stich werden die Baumsäfte z.T. in Harz umgesetzt. Synthetische Polymere sind beispielsweise Polyethylen, Polypropylen, Polyvinylacetat (PVAc), Polyvinylalkohol (PVA) oder Polyacrylate.

Aus der US-A 6,6165,529 ist die Verwendung von wässrigen Beschichtungsmitteln bekannt, die kaltwasserunlöslichen, vollständig verseiften Polyvinylalkohol, Stärke und ein Surfactant enthalten. Allerdings hat die Kaltwasserunlöslichkeit des Polyvinylalkohols verschiedene anwendungstechnische Nachteile.

Die Verwendung einer 15-35 %igen PVAc Emulsion zum Coating von Bananen wird in der US-A 3262785 zur Verzögerung der Reifung beschrieben. Die Verlängerung der Nachernte Haltbarkeit von verderblichem Obst und Gemüse mit wenigstens 50 Gewichts-% PVAc, so dass das Coating Material 0,5-1,5 % des Gewichts des Obstes oder Gemüse beträgt, offenbart US 3410696.

CS 122635 beschreibt eine Emulsion aus PVAc und Polyvinylalkohol zum Lebensmittel-Coating am Beispiel von Käse. Die Verwendung von PVAc mit Phthalaten als Weichmacher für den Überzug von Obst und Gemüse wird in FR 1453484 beschrieben. Phthalate sind jedoch hinsichtlich ihres toxikologischen Profils und ihrer Migrationseigenschaften als Lebensmittelkontaktmaterial nicht geeignet. Aus der WO 00/18375 ist die Verwendung von PVA-Polyether-Pfropfcopolymeren als Bindemittel oder filmbildende Hilfsmittel für pharmazeutische Darreichungsformen bekannt.

In der DE 1236310 wird eine wässrige Dispersion von PVAc zum Coating von Lebensmitteln, insbesondere von Käse, offenbart.

Aus der US-A 6,162,475 ist die Verwendung von alkoholischen Lösungen von PVAc zum Coating von Früchten, Gemüse und verarbeiteten Lebensmitteln mit hoher Glanzbildung bekannt.

Nachteilig an Beschichtungen aus PVAc ist jedoch die geringe Wasserlöslichkeit der Überzüge. Zwar ist PVAc ein für die Lebensmitteltechnologie zugelassenes Polymer, welches mitverzehrt werden kann, jedoch kann der PVAc-Überzug beim Verzehr ein unangenehmes Mundgefühl verursachen.

In der WO 03/070224 ist ganz allgemein erwähnt, dass Polvinylalkohol-Polyether-Pfropfcopolymere in Kombination mit anderen polymeren Inhaltsstoffen zur Beschichtung von Lebensmitteln verwendet werden können. Konkret werden allerdings lediglich Arzneiformen, die einen wirkstoffhaltigen Kern und entsprechende Beschichtungen aufweisen, beschrieben.

Aufgabe der vorliegenden Erfindung war es, verbesserte Überzüge für die Beschichtung von Lebensmittel zu finden, die günstigere anwendungstechnische Eigenschaften aufweisen und zu keiner Beeinträchtigung der organoleptischen Eigenschaften führen.

Demgemäß wurde ein Verfahren und die Verwendung von wässrigen Dispersionen von Polyvinylalkohol-Polyether-Pfropfcopolymeren als Mischung mit Polyvinylacetaten für die Beschichtung von Lebensmitteln gefunden.

Lebensmittel im Sinne der vorliegenden Erfindung sind vor allem Obst, Gemüse, Käsereiprodukte, Wurst- und Schinkenprodukte, Eier oder Backwaren. Insbesondere bezieht sich die Erfindung auf die Behandlung von Obst wie Bananen, Äpfeln, Birnen, Mangos, Papayas, Avocados, Erdbeeren und dergleichen sowie auf die Behandlung von Eiern.

Die Erfindung betrifft eine Mischung der PVA-PEG-Pfropfcopolymere mit Polyvinylacetat (PVAc) in unterschiedlichen Mischungsverhältnissen, um die Barriereeigenschaften und mechanischen Eigenschaften des Filmüberzugs an die Bedürfnisse der jeweiligen Applikation anzupassen.

Die erfindungsgemäß verwendeten Polyvinylalkohol-Polyether-Pfropfcopolymere sind an sich bekannt, ebenso wie ihre Verwendung in pharmazeutischen oder kosmetischen Darreichungsformen. Ihre Herstellung ist beispielsweise in der WO 02/26845 und der EP-A 1125954 allgemein beschrieben.

Zur Herstellung wird Vinylacetat in Gegenwart einer Polyether-Pfropfgrundlage polymerisiert und anschließend die Estergruppen auf an sich bekannte Weise verseift, beispielsweise durch Zugabe von Basen. Der Verseifungsgrad der Estergruppen im Polyvinylalkohol-Teil beträgt 80 bis 100 %, vorzugsweise 90 bis 100 %.

In besonderer Weise eignen sich Pfropfcopolymere mit einem hohen Molekulargewicht. So sollte das PVA-Polyether-Pfropfcopolymer ein mittleres Molekulargewicht von über 25.000 Dalton und bis zu 150.000 Dalton, vorzugsweise 35.000 bis 100.000, besonders bevorzugt 40.000 bis 60.000 Dalton aufweisen.

Bevorzugt werden Pfropfcopolymere verwendet, die als Pfropfgrundlage ein Polyethylenglykol oder Polypropylenglykol mit einem mittleren Molekulargewicht von 400 bis 50.000, bevorzugt 1000 bis 20.000, besonders bevorzugt 3000 bis 10.000, aufweisen.

Ebenso eignen sich Alkyl-Polyethylenglykole oder Alkyl-Polypropylenglykole, wobei Alkyl- beispielsweise Methyl, Ethyl-, Propyl-, Butyl- Octyl-, Dodecyl-, Octadecyl bedeuten kann.

Weiterhin eignen sich als Pfropfgrundlage auch Polyoxyethylen-polyoxypropylen-Blockcopolymere vom Typ A-B oder A-B-A, wobei A für den Polyoxyethylen- und B für den Polyoxypropylen-Teil steht. Das Verhältnis A-B beträgt vorzugsweise 90:10 bis 30:70 und das Verhältnis A:B:A 45:10:45 bis 15:70:15.

Das Mengenverhältnis der als Pfropfgrundlage verwendeten Polyether zu Polyvinylalkohol beträgt 1:0,5 bis 1 :50, bevorzugt 1: 1,5 bis 1:35, besonders bevorzugt 1:2 bis 1:30.

Das gemäß einer besonderen Ausführungsform in Form einer wässrigen Dispersion mitverwendete PVAc sollte bevorzugt ein mittleres Molekulargewicht von über 200.000 Dalton und bis zu 1.000.000 Dalton, bevorzugt 300.000 bis 700.000 Dalton aufweisen. Die Herstellung von wässrigen PVAc-Dispersionen ist an sich bekannt. Die Herstellung bevorzugter PVAc-Dispersionen ist beispielsweise in der WO 02/26845 beschrieben.

Die wässrige PVAc-Dispersion kann durch polymere Schutzkolloide stabilisiert sein. Als Schutzkolloid eignet sich bevorzugt Polyvinylpyrrolidon (PVP), besonders bevorzugt PVP K20 bis K40, insbesondere K30, wobei das Schutzkolloid in einer Menge von 5 bis 20 Gew.-%, bezogen auf die Menge der Vinylacetatmonomeren, eingesetzt wird. Weiterhin kommen aber alkylierte, hydroxyalkylierte oder carboxyalkylierte Cellulosen bzw. Stärken wie z.B. Hydroxypropylcellulose, Methylcellulose, Carboxymethylstärke sowie Polyvinylalkohole und Vinylpyrrolidon-Vinylacetat-Copolymere als Schutzkolloide in Betracht.

Weiterhin können die PVAc-Dispersionen auch ionische Emulgatoren in Mengen von 0,2 bis 5 Gew.-%, bezogen die Menge der Vinylacetatmonomeren, enthalten. Als Emulgatoren eignen sich beispielsweise Alkalimetall- oder Ammoniumsalze von C8-C16-Alkylsulfaten, C8-C16-Alkylsulfonsäuren, von Schwefelsäure-halbester ethoxylierter Alkanole (Ethoxylierungsgrad: 4 bis 100, Alkyl: C12-C16), ethoxylierter Akylphenole (EO-Grad 3 bis 50, Alkyl: C4 bis C12) oder von C9-C18-Alkylarylsulfonsäuren. Ferner können auch Alkalimetall- oder Ammoniumsalze von Fettsäuren oder Lecithin verwendet werden.
Bevorzugt wird Natriumlaurylsulfat als Emulgator verwendet.

Als PVAc ist erfindungsgemäß insbesondere ein Produkt geeignet, welches einen besonders geringen Restmonomerengehalt von maximal 100 ppm aufweist. Bevorzugt ist weiterhin eine mittlere Teilchengröße der Polymerpartikel von 50 bis <200 nm, besonders bevorzugt 80 bis 180 nm, wobei die Teilchengröße durch Lichtstreuung ermittelt wird.

Eine ganz besonders bevorzugte PVAc-Qualität ist kommerziell als Kollicoat^{®} SR 30D, Firma BASF Aktiengesellschaft Ludwigshafen, erhältlich.

Die erfindungsgemäß zur Beschichtung von Lebensmitteln verwendeten wässrigen Dispersionen, wobei der Begriff "Dispersion" erfindungsgemäß auch "wässrige Lösungen" umfasst, können wie bereits erwähnt als filmbildendes Polymer Abmischungen des Propfcopolymers mit PVAC enthalten. Die wässrigen Dispersionen können demnach folgende Zusammensetzungen aufweisen, wobei sich die Angaben in Gew.-% auf das Trockengewicht beziehen, und die Summe von a), b) und c) gleich 100 Gew.-% ist:
a) 10 bis 90 Gew,.% eines Polyvinylalkohol-polyether-Pfropfcopolymers,
b) 10 bis 90 Gew.-% Polyvinylacetat, und
c) 0 bis 40 Gew.-% Hilfsstoffe.

Bevorzugte Abmischungen enthalten:
a) 15 bis 85 Gew.-% eines Polyvinylalkohol-polyether-Pfropfcopolymers,
b) 15 bis 85 Gew.-% Polyvinylacetat, und
c) 0 bis 40 Gew.-% Hilfsstoffe.

Die Oberflächenbehandlungsmittel in Form wässrige Dispersionen oder wässriger Lösungen weisen im allgemeinen einen Feststoffgehalt von 5 bis 50 Gew.-%, bevorzugt 10 bis 40 Gew.-%, auf.

Zur Herstellung der Mittel kann auf verschiedene Weise vorgegangen werden: Das PVA-PEG-Propfcopolymer kann als Pulver, welches durch Verrühren mit Wasser bei Raumtemperatur wieder in Lösung geht, eingesetzt werden. Bei Verwendung eines Pfropfcopolymers, das nur teilweise wasserlöslich ist, entsteht hierbei eine Dispersion.
Es kann aber auch die aus der Polymerisation hervorgehende wässrige Lösung bzw. Dispersion direkt eingesetzt werden. Sofern diese nicht selbst keimhemmend ist, wird ihr zur Vermeidung mikrobieller Kontamination bei Lagerung ein Konservierungsmittel zugesetzt.

Das PVAc kommt bevorzugt in Form wässriger Dispersionen mit einen Feststoffgehalt von 10 bis 50 Gew.-%, bevorzugt 20 bis 40 Gew.-%, zum Einsatz.

Die wässrigen Oberflächenbehandlungsmittel können neben den filmbildenden Polymeren weitere Hilfsmittel enthalten, beispielsweise funktionelle Inhaltsstoffe wie antimikrobielle Substanzen zur Verbesserung der Lebensmittelsicherheit, Konservierungsmittel, Antioxidantien (Ascorbinsäure und deren Salze, Isoascorbinsäure und deren Salze, Ascorbylpalmitat bzw. -stearat, Butylhydroxytoluol, Butylhydroxyanisol, Ethoxyquin, Nordihydroguaiaretsäure und deren Salze, Isopropylcitrat, Gallussäureester, Tocopherole, Verbindungen mit SH- Struktur wie z.B. Cystein, N-Acetylcystein, Sulfite, antioxidativ wirkende Extrakte wie z.B. Rosmarinextrakt,) zur Vermeidung der Lipidperoxidation bzw. nicht enzymatischen Bräunung sowie Farbstoffe, Aromastoffe, Vitamine, Mineralstoffe, Enzyme, Gewürze und UV-Absorber zur Verbesserung der organoleptischen Eigenschaften des betreffenden Lebensmittels. Die Hilfsmittel können in Mengen von 0 bis 40 Gew.-%, bevorzugt 1 bis 30 Gew.-%, bezogen auf das Trockengewicht des Oberflächenbehandlungsmittels, eingesetzt werden.

Als Konservierungsmittel kommen die folgenden Substanzklassen in Betracht, wobei sich die angegebenen Mengen auf das Trockengewicht des Oberflächenbehandlungsmittels beziehen.

Antibiotika, z.B. Natamycin, Erythromycin: 0,0005 bis 1,0 Gew.-%, vorzugsweise 0,001 bis 0,5 Gew.-%

Säuren: 0,01 bis 3 Gew.%, vorzugsweise 0,05 bis 1 Gew.-%,
geeignete Säuren sind beispielsweise Benzoesäure, Sorbinsäure, Ameisensäure, Propionsäure, Undecylensäure,
Salicylsäure, Peressigsäure, Schweflige Säure/Schwefeldioxid

Parahydroxybenzoesäureester: 0,01 bis 3 Gew.-%, vorzugsweise 0,05 bis 1 Gew.-%. Geeignete Ester sind beispielsweise Parahydroxybenzoesäurepropylester, Parahydroxybenzoesäüremethylester,
Parahydroxybenzoesäureethylester,
Parahydroxybenzoesäurebutylester,
Parahydroxybenzoesäurebenzylester

Alkohole: 0,05 bis 10 Gew.-%, vorzugsweise 0,2 bis 2 Gew.%, beispielsweise Chlorbutanol, Benzylalkohol, Phenylethanol, Propylenglykol, Menthol

Phenole: 0,01 bis 3 Gew.-%, vorzugsweise 0,05 bis 1 Gew.-%, beispielsweise Chlorphenol, p-Chlor-m-kresol, Thymol, 4-Chlorthymol, o-Phenylphenol, 8-Hydroxychinolin, Eugenol, Hydrochinon

Aldehyde: insbesondere Formaldehyd und Acetaldehyd, 0,01 bis 3 Gew.-%, vorzugsweise 0,05 bis 1 Gew.-%.

Imidazolidinharnstoffderivate: 0,01 bis 3 Gew.%, vorzugsweise 0,05 bis 1 Gew.-%

Isothiazoline: von 0,01 bis 3 Gew.-%, vorzugsweise 0,05 bis 1 Gew.-%

Quaternäre Verbindungen: 0,001 bis 2 Gew.-%, vorzugsweise 0,05 bis 1 Gew.-%, beispielsweise Benzalkoniumchlorid, Cetylpyridiniumchlorid

Benzimidazole: 0,01 bis 3 Gew.-%, vorzugsweise 0,05 bis 1 Gew.-%, beispielsweise 2-(4-Thiazolyl)benzimidazol

Metallionen/Metalle: 0,00001 bis 0,5 Gew.%, vorzugsweise 0,0001 bis 0,05 Gew.-%, beispielsweise Silber, Kupfer, Zink

PVP-Iod: 0,01 bis 3 Gew.-%, vorzugsweise 0,05 bis 1 Gew.-%

Peroxide: 0,01 bis 5 Gew.%, vorzugsweise 0,05 bis 1 Gew.%, beispielsweise Wasserstoffperoxid, Benzoylperoxid

Biphenyl: 0,001 bis 2 Gew.-%, vorzugsweise 0,01 bis 1 Gew.-%

Weiterhin können die Oberflächenbeschichtungsmittel auch Weichmacher in Mengen von 0,1 bis 10 Gew.-% vorzugsweise 0,5 bis 7,5 Gew.-%, bezogen auf das Trockengewicht des Coatings eingesetzt werden. Als Weichmacher eignen sich beispielsweise Triacetin, Triethylcitrat, Polyethylenglycole mit Molekulargewichten von 400 bis 10.000, Propylenglykol, Glycerin, Diethylsebacat, Dibutylsebacat, Glycerolmonostearat.

Die Applikation der erfindungsgemäßen Überzüge kann durch verschiedene Prozesse wie z.B. Tauchen, Aufsprühen oder Aufrakeln der wässrigen Dispersion erfolgen, wobei die Trocknung simultan oder anschließend vorgenommen werden kann. Die Trocknung kann durch Zuführen von warmer Luft, Mikrowellenstrahlen oder durch Infrarotstrahlen erfolgen. Der gesamte Beschichtungsprozess kann diskontinuierlich oder kontinuierlich ausgelegt werden.

Alternativ kann aus dem Polymer ein Film hergestellt werden, der sich durch Schrumpfung dicht um das Lebensmittel legt. Eine solche Vorgehensweise eignet sich insbesondere für Wurst- und Schinkenprodukte.

Die Schichtdicken des Überzuges können je nach Lebensmittel und Funktion des Überzuges zwischen 0,2 und 200 µm, vorzugsweise zwischen 1 und 75 µm, betragen. Die Filmdicke lässt sich dabei über die Auftragsmenge steuern.

Erfindungsgemäß mit Filmen beschichtete Lebensmittel können zur Sterilisation ohne weitere Vorbehandlung bestrahlt werden oder einer kontrollierten Atmosphäre ausgesetzt werden. Ferner können die Lebensmittel thermisch vorbehandelt sein.

Die erfindungsgemäßen Oberflächenbehandlungsmittel erlauben auch eine gezielte Steuerung der Gas- und Wasserdampfpermeation mit Hilfe der gebildeten Filme. PVAc ist ein relativ lipophiles Polymer und weist daher eine verhältnismäßig hohe Permeabilität für Sauerstoff und eine niedrige für Wasserdampf auf. PVA-PEG ist hingegen sehr hydrophil und damit durchlässiger für Wasserdampf und weniger durchlässig für Sauerstoff. Auch die Permeabilität für Kohlendioxid, Ethen, Stickstoff und von anderen Gasen bzw. Mediatoren kann durch Wahl des Verhältnisses der beiden Polymere gezielt eingestellt werden. Auf diese Weise kann beispielsweise bei Obstprodukten, bei denen die Reifung über die Ethenkonzentration beeinflusst wird, ein speziell auf das lipophile Ethen abgestimmtes Oberflächenbehandlungsmittel gewählt werden.

Die gezielte Steuerung der Wasserdampfpermeation hat auch zur Folge, dass die Lebensmittel weniger Gewichtsverlust durch Austrocknung erleiden.

Die Permeabilität von Filmen verschiedener Zusammensetzung wurde nach ASTM F1249 (Wasserdampf) und ASTM D3985(81) bestimmt. Die Ergebnisse sind in Tabelle 1 aufgeführt.

**Tabelle 1**

| Permeabilität | | |
|---|---|---|
| | Sauerstoffpermeabilität (cm³×100Nm/m²×d×bar) bei 23°C/55 % rel. Feuchte | Wasserdampfpermeabilität (g×100Nm/m²×d) bei 23°C/85 % rel. Feuchte zu 0 % rel. Feuchte |
| PVA-PEG) | 83 | 450 |
| PVA-PEG / PVAc 8:2 | 134 | 517 |
| PVA-PEG / PVAc 6:4 | 155 | 394 |
| PVA-PEG / PVAc 4:6 | 166 | 357 |
| PVA-PEG / PVAc 2:8 | 184 | 231 |
| PVAc | 236 | 164 |

Als PVA-PEG wurde verwendet: Kollicoat® IR, 25 Gew.-% wässrige Lösung eines Pfropfcopolymers aus Polyethylenglykol 6000/Polyvinylalkohol (PEG:PVA=25:75), MG: 45000 Dalton
Als PVAc wurde verwendet: Kollicoat SR 30D, wässrige PVAc-Dispersion mit 30 Gew.-% Feststoffgehalt , enthaltend 27 Gew.-% PVAc (MG: 450.000 Dalton), 2,7 Gew.-% Polyvinylpyrrolidon K30, 0,3 Gew.-% Natriumlaurylsulfat; Teilchengröße 150 bis 160 nm

Durch gezielte Wahl des Verhältnisses der beiden Polymeren können neben den Barriereeigenschaften auch die Auflösungseigenschaften der Filme gezielt eingestellt werden. Überwiegt das PVA-PEG Pfropfcopolymer in der Mischung oder wird es allein eingesetzt, erhält man einen Überzug, der sich in Wasser auflöst bzw. der desintegriert. So können zum Beispiel Äpfel, die auf diese Weise überzogen wurden, durch einfaches Waschen vom Überzug befreit werden. Überwiegt hingegen das PVAc Polymer so erhält man einen wasserbeständigen Film, der mitverzehrt werden kann.

Der besondere Vorteil der verwendeten Polymeren liegt auch darin, dass sie eine hohe Flexibilität aufweisen und in der Regel keinen Weichmacher benötigen. Für die Oberflächenbehandlung von Lebensmitteln ist eine ausreichende Flexibilität unbedingt erforderlich, da ansonsten durch die leichte Verformbarkeit von vielen Lebensmitteln Risse entstehen, die neben ihrem unschönen Aussehen auch den Schutz des Lebensmittels stark beeinträchtigen. Überraschenderweise zeigt die Kombination von PVA-PEG-Pfropfcopolymer mit PVAc eine besondere Synergie, da die Reißdehnung die Werte der Einzelkomponenten weit übersteigt. Dies wurde durch Flexibilitätsmessungen an Filmen, die aus unterschiedlichen Mischungen erhalten wurden, bestimmt. Die Ergebnisse sind in Tabelle 2 aufgeführt.

Die Bestimmung erfolgte nach DIN 53504 bei 23°C/53 % r.F. (relative Feuchte) mit einem Texture Analyzer TA-XT2 HiR der Firma Stable Micro Systems.

**Tabelle 2: Flexibilitätsmessungen**

| | Reißdehnung (%) | Zugfestigkeit (N / mm²) |
|---|---|---|
| PVA-PEG | 75 | 14 |
| PVA-PEG / PVAc 8:2 | 94 | 16 |
| PVA-PEG / PVAc 6:4 | 112 | 21 |
| PVA-PEG / PVAc 4:6 | 36 | 25 |
| PVA-PEG / PVAc 2:8 | 12 | 29 |
| PVAc | 3 | 44 |

| | | |
|---|---|---|
| PVA-PEG: Kollicaoat IR PVAc: Kollicoat SR 30 D | | |

Ist die Flexibilität der Filme dennoch nicht ausreichend, so reicht eine geringe Menge Weichmacher aus, um die Flexibilität enorm zu erhöhen. So wird bei reinem PVAc (Kollicoat SR 30D) durch Zugabe von 10 % Propylenglykol eine Reißdehnung von 300% und durch Zugabe von 5 % Triacetin eine von 188 % erzielt. Bei den Kombinationen aus PVA-PEG-Pfropfcopolymeren und PVAc liegen die entsprechenden Werte mit Weichmacher deutlich oberhalb von 300%. Beispielsweise weist ein Film aus PVAc : PVA-PEG Pfropfcopolymer 8:2 mit 10% Propylenglycol eine Reißdehnung von 370% auf.

Nachgewiesenermaßen sind auch Mikroorganismen nicht in der Lage die erfindungsgemäßen Filme zu penetrieren, wodurch der mikrobielle Verderb von Lebensmittels erheblich hinausgezögert wird. Die Dichtigkeit der erfindungsgemäßen Filme wurde in Anlehnung an die DIN 58953 geprüft, wobei Keime auf die eine Seite eines Filmes aufgebracht wurden und auf der anderen Seite eventuell durchdiffundierte Keime nachgewiesen wurden.

Bei vielen Lebensmitteln spielt das Aussehen eine sehr große Rolle. So ist insbesondere der Glanz häufig unzureichend und soll verbessert werden. Durch die extrem gute Verfilmung und die sehr niedrige Rauhigkeit der erfindungsgemäßen Filme weisen diese einen sehr hohen Glanz auf, der zudem kaum durch die Umgebungsbedingungen wie Temperatur und Luftfeuchte verändert wird.

Überzüge über Lebensmittel sollen den Geschmack nicht nachteilig beeinflussen und durch Stabilisierung des Lebensmittels zu einer Erhaltung des Geschmackes nach Lagerung beitragen. Es ist daher ganz entscheidend, dass die Überzüge nur geringe Mengen an niedermolekularen Bestandteilen wie z.B. Monomeren, Weichmacher, Tenside, Stabilisatoren, aufweisen, denn diese können in das Lebensmittel migrieren und Veränderungen auslösen. Die erfindungsgemäßen Überzüge weisen gerade in dieser Hinsicht gegenüber dem Stand der Technik eine sehr geringe Konzentrationen an diesen Stoffen auf und sind daher in hohem Maße für diese Anwendung geeignet.

Weiterhin bieten die erfindungsgemäß erhaltenen Überzüge auch den Vorteil, dass sie bei solchen Applikationen, bei denen Abwaschbarkeit vom Lebensmittel erwünscht ist, gegenüber reinen Polyvinylacetat- oder Polyvinylalkohol-Überzügen eine verbesserte Abwaschbarkeit aufweisen.

Die erfindungsgemäß verwendeten Mittel haben auch den Vorteil, dass auf die Verwendung von Alkohol völlig verzichtet und im rein wässrigen Milieu gearbeitet werden kann, wodurch erhebliche Vorteile im Hinblick auf Sicherheit, Umweltschutz und Kosten erzielt werden. Ein weiterer anwendungstechnischer Vorteil ist die gute Kaltwasserlöslichkeit des PVA-PEG-Pfropfcopolymers.

Darüber hinaus verleiht das in der Abmischung bevorzugt verwendete PVAc aufgrund seines geringen Monomergehalts von <100 ppm bei gleichzeitig hohen Verfilmungs-und Filmeigenschaften den Oberflächenbehandlungsmittel besondere Vorzüge. Hierfür ist insbesondere die kleine Teilchengröße der Dispersionströpfchen (< 200 nm) verantwortlich. Hierdurch bildet sich auch in der Abmischung mit dem Pfropfcopolymer ein extrem homogener Film aus.

Herstellbeispiele von PVA-PEG-Pfropf-Copolymeren

### Beispiel A (Polymer A)

In einem Polymerisationsgefäß wurden 72 g Polyethylenglykol (mittleres Molekulargewicht 6000) vorgelegt und unter Rühren und leichtem Stickstoffstrom auf 80°C erhitzt. Unter Rühren wurde unter Aufrechterhaltung der 80°C ein Zulauf von 410 g Vinylacetat in 3 h und gleichzeitig ein weiterer Zulauf von einer Lösung von 1,4 g tert-Butylperpivalat in 30 g Methanol ebenfalls in 3 h zugetropft. Nach vollständiger Zugabe wurde noch 2 h bei 80°C gerührt. Nach dem Abkühlen wurde das Polymerisat in 450 ml Methanol gelöst. Zur verseifung wurden bei 30°C 50 ml einer 10%igen methanolischen Natriumhydroxidlösung zugegeben. Nach 45 min. wurde die Reaktion durch Zugabe von 750 ml 1 %iger Essigsäure abgebrochen. Zur Entfernung des Methanols wurde die Lösung wasserdampfdestilliert. Nach anschließender Gefriertrocknung der klaren Lösung erhielt man ein weißes Pulver. Mittleres Molekulargewicht 45.000 Dalton, Verseifungsgrad 94 %.

Anwendungstechnische Beispiele

### Beispiel 1

Erhöhung der Haltbarkeit von Bananen

Handelsübliche gelbe Bananen wurden kurz 5 Sekunden in verschiedene Polymerlösungen getaucht. Nach dem Abtropfen überschüssiger Polymerlösung wurden die Bananen im warmen Luftstrom von 30°C getrocknet, bis sich die Flüssigkeit auf der Bananenschale zu einem gleichmäßigen Film verfestigt hat.

Als Beschichtungmittel wurden folgende Polymer-Zubereitungen eingesetzt:

PVA-PEG-Pfropfcopolymer A (gemäß Beispiel A), 5 gew.%ig in Wasser, zum Vergleich

PVA-PEG-Pfropfcopolymer A, 10 gew.%ig in Wasser, zum Vergleich

Wässrige Mischung aus PVAc (Kollicoat SR 30 D) und PVA-PEG-Pfropfcopolymer A, enthaltend 25 Gew.-% PVAc, 2,5 Gew.-% PVA-PEG Pfropfcopolymer und 2,5 Gew.-% Propylenglykol, insgesamt 30 Gew.-% Feststoffanteil in Wasser

Die Bananen wurden anschließend bei 25°C und ca. 30% Luftfeuchte gelagert.

Nach 7 Tagen wurden die Bananen gewogen und visuell beurteilt.

Alle behandelten Bananen wiesen nach der Lagerung einen besseren Geschmack auf als die unbehandelten.

| | Gewichtverlust | visuelle Beurteilung |
|---|---|---|
| Anfang | - | gleichmäßige gelbe Farbe, weniger als 5 % dunkle Flecken |
| unbehandelt | 22,6% | Mehr als 75% dunkle Stellen, kaum noch gelbe Farbe |
| 5 % PVA-PEG zum Vergleich | 17,8% | 5 bis 15% dunkle Stellen, überwiegend gelb, leichter Glanz |
| zum Vergleich zum Vergleich | 16,9% | 5 bis 10% dunkle Stellen, gelb, glänzend |
| PVAC 1 PVA-PEG 10:1 | 13,7% | 0 bis 10 % dunkle Stellen, gelb, starker Glanz |

### Beispiel 2

### Verbesserung des Glanzes von Äpfeln

Handelsübliche Äpfel des Typs Idared wurden mit einer 50%igen Ethanol-Wasser Mischung entwachst, kurz in die in Beispiel 1 genannten Lösungen getaucht, herausgeholt, im warmen Luftstrom getrocknet und visuell beurteilt. Anschließend wurden die Äpfel 11 Wochen bei 25°C und 30% relativer Luftfeuchte gelagert und nochmals beurteilt. Durch die Behandlung entstanden geschmacklich keine Beeinträchtigungen.

| | visuelle Beurteilung nach der Herstellung | visuelle Beurteilung nach 11 Wochen |
|---|---|---|
| Unbehandelt | mattes Aussehen | mattes Aussehen, leicht schrumpelig |
| | | |
| | | |
| PVAc / PVA-PEG 10:1 | starker Glanz | starker Glanz |

### Beispiel 3

### Verbesserung der Haltbarkeit, der mechanischen Festigkeit und des Aufschlagverhaltens von Eiern

Eier der Handelsklasse M wurden auf einem Sieb in nachstehend genannte Polymerlösung getaucht herausgeholt und im 40°C warmen Luftstrom abgetrocknet. Die Eier wurden visuell beurteilt und gewogen. Nach einer Lagerung über 4 Wochen im Kühlschrank bei 8°C wurden die Eier nochmals untersucht und auch das Aufschlagverhalten getestet. Bei letzterem wurden die Eier auf die Kante einer Schüssel geschlagen und die Zahl der kleinen Bruchstücke bestimmt.

| | Gewichtverlust | visuelle Beurteilung | Aufschlagverhalten |
|---|---|---|---|
| Anfang | - | matt | |
| unbehandelt | 3,24 % | matt | 3 bis 7 kleine Bruchstücke |
| | | | |
| | | | |
| | | | |
| PVAc / PVA-PEG 3:2, 25 % Feststoffgehalt | 1.63 % | schöner Glanz | 0 kleine Bruchstücke |

### Beispiel 4

### Herstellung von krümelarmen Keksen

Handelsübliche Butterkekse der Firma Bahlsen mit einem Gewicht von ca. 5 g wurden auf der Vorder- und Rückseite mit der in Beispiel 1 genannten Polymerdispersion besprüht. Die verwendete Sprühdüse wies eine Öffnungsweite von 0,5 mm auf, der Sprühdruck betrug 1 bar. Die besprühten Kekse wurden direkt anschließend 8 min. bei 100°C im Ofen getrocknet. Die aufgebrachte Polymermenge betrug 60 mg pro Keks. Nach der Herstellung wurden die Kekse visuell beurteilt und das Gewicht der Krümel bestimmt, die nach kreuzweisem Durchbrechen entstehen.
Der Geschmack der Kekse wurde durch den Polymerauftrag nicht nachteilig beeinflusst.

| | visuelle Beurteilung nach der Herstellung | Krümelgewicht (Durchschnittswert aus N=20) |
|---|---|---|
| unbehandelt | mattes Aussehen | 27 mg |
| | | |
| | | |
| PVAc / PVA-PEG A 10:1 | starker Glanz | 9,4 mg |

### Beispiel 5

### Abwaschbarkeit

Unbehandelte Äpfel wurden mit den nachstehenden wässrigen Polymerlösungen, die jeweils einen Feststoffgehalt von 5,5 Gew.-% aufwiesen, durch Eintauchen mit einem Überzug versehen, anschließend 30 Sekunden in Wasser von 21°C getaucht und getrocknet. Die abgewaschene Menge an polymerem Überzug wurde in % der Auftragsmenge bestimmt.

| | |
|---|---|
| Kollicoat IR zum Vergleich | 88,5% |
| Kollicoat IR/ Kollicoat SR 30 D 1:9 | 42,4% |
| Kollicoat SR 30 D zum Vergleich | 17,9% |
| zum Vergleich Polyvinylalkohol | 26,1% |

### Beispiel 6

### Keimdichtigkeit

In dieser Prüfung, die in Anlehnung an DIN 58953 erfolgt, wurden Polymerfilme folgender Zusammensetzung getestet:
PVA-PEG-Pfropfcopolymer (75 : 25) : PVAc 50 : 50
PVA-PEG-Pfropfcopolymer (75 : 25) : PVAc 15 : 85

Aus dem zu prüfenden Polymerfilm mit einer Schichtdicke von ca. 50 µm wurden kreisrunde Stücke mit einem Durchmesser von 42mm ausgeschnitten. 10 g Quarzpulver wurden mit 10 ml einer alkoholischen Keimsuspension von Bacillus subtilis mit etwa 1000000 KBE/ml gemischt und bei 36°C 16 h lang getrocknet.
In sterile Laborglasflaschen mit 250 ml Volumen wurden 20 ml Caso-Agar eingefüllt. Die Probenstücke wurden zwischen zwei Dichtungsringen auf dem Rand der Laborglasflasche fixiert. 0,25 g des belasteten Quarzpulvers wurden gleichmäßig auf die Probenstücke verteilt.
Das Keimdurchlässigkeitsprüfgerät wurde auf 50°C erwärmt. Anschließend wurde es bei 10°C in einen Kühlschrank gestellt, um einen Sog zu verursachen. Dieser Vorgang wurde 5 mal wiederholt.
Anschließend wurde das Keimdurchlässigkeitsprüfgerät bei 36°C 24 h bebrütet.
Bei keinem Polymerfilm konnte ein Keimwachstum im Caso-Agar festgestellt werden, weil die Keime den Film nicht permeieren konnten.

## Patentansprüche

1. Verfahren zur Oberflächenbehandlung von Lebensmitteln durch Aufbringen eines Polymerfilms, als filmbildendes Polymer ein Polyvinylalkohol-polyether Pfropfcopolymer in Form einer wässrigen Dispersion auf das Lebensmittel aufgebracht wird, **dadurch gekennzeichnet, dass** die wässrige Dispersion, bezogen auf den Trockengehalt,
a) 10 bis 90 Gew.-% eines Polyvinylalkohol-polyether-Pfropfcopolymers,
b) 10 bis 90 Gew.-% Polyvinylacetat, und
c) 0 bis 50 Gew.-% Hilfsstoffe enthält.

2. Verfahren nach Anspruch 1, **dadurch gekennzeichnet, dass** die wässrige Dispersion, bezogen auf den Trockengehalt,
a) 15 bis 85 Gew.-% eines Polyvinylalkohol-polyether-Pfropfcopolymers,
b) 15 bis 85 Gew.-% Polyvinylacetat, und
c) 0 bis 50 Gew.-% Hilfsstoffe enthält.

3. Verfahren nach Anspruch 1 oder 2, **dadurch gekennzeichnet, dass** die wässrige Dispersion ein Polyvinylacetat mit einem Restmonomerengehalt < 100 ppm enthält.

4. Wässriges Oberflächenbehandlungsmittel für Lebensmittel, enthaltend 10 bis 90 Gew.%, bevorzugt 15 bis 85 Gew.%, eines Polyvinylalkohol-polyethylenglykol-Pfropfcopolymeren mit einem mittleren Molekulargewicht von 25000 bis 150000 Dalton und 10 bis 90 Gew.-%, bevorzugt 20 bis 85 Gew.-% Polyvinylacetat mit einem mittleren Molekulargewicht von 200000 bis 1000000 Dalton bezogen auf das Trockengewicht des Oberflächenbehandlungsmittels.

5. Oberflächenbehandlungsmittel nach Anspruch 4, enthaltend ein Polyvinylacetat mit einer mittleren Teilchengröße von 50 bis <200 nm.

6. Oberflächenbehandlungsmittel nach Anspruch 4 oder 5, enthaltend ein Polyvinylacetat mit einem Restmonomerengehalt < 100 ppm.

7. Mit einem Polymerfilm beschichtetes Lebensmittel, wobei der Polymerfilm aus
a) 10 bis 90 Gew.-% eines Polyvinylalkohol-polyether-Pfropfcopolymers,
b) 10 bis 90 Gew.-% Polyvinylacetat, und
c) 0 bis 50 Gew.-% eines oder mehrerer Hilfsstoffe besteht.

## Claims

1. A process for surface treatment of foods by applying a polymer film, applying to the food, as film-forming polymer, a polyvinyl alcohol-polyether graft copolymer in the form of an aqueous dispersion, wherein the aqueous dispersion, based on the dry content, comprises:
a) from 10 to 90% by weight of a polyvinyl alcohol-polyether graft copolymer,
b) from 10 to 90% by weight of polyvinyl acetate, and
c) from 0 to 50% by weight of aids.

2. A process as claimed in claim 1, wherein the aqueous dispersion, based on the dry content, comprises
a) from 15 to 85% by weight of a polyvinyl alcohol-polyether graft copolymer,
b) from 15 to 85% by weight of polyvinyl acetate, and
c) from 0 to 50% by weight of aids.

3. A process as claimed in claim 1 or 2, wherein the aqueous dispersion comprises a polyvinyl acetate having a residual monomer content < 100 ppm.

4. An aqueous surface-treatment composition for foods comprising from 10 to 90% by weight, preferably from 15 to 85% by weight, of a polyvinyl alcohol-polyethylene glycol graft copolymer having a mean molecular weight of from 25 000 to 150 000 dalton and from 10 to 90% by weight, preferably from 20 to 85% by weight, of polyvinyl acetate having a mean molecular weight of from 200 000 to 1 000 000 dalton, based on the dry weight of the surface-treatment composition.

5. A surface-treatment composition as claimed in claim 4 comprising a polyvinyl acetate having a mean particle size of from 50 to < 200 nm.

6. A surface-treatment composition as claimed in claim 4 or 5 comprising a polyvinyl acetate having a residual monomer content < 100 ppm.

7. A food coated with a polymer film, the polymer film consisting of
a) from 10 to 90% by weight of a polyvinyl alcohol-polyether graft copolymer,
b) from 10 to 90% by weight of polyvinyl acetate, and
c) from 0 to 50% by weight of aids.

## Revendications

1. Procédé de traitement de surface de denrées alimentaires par application d'un film polymère en appliquant sur la denrée alimentaire, comme polymère filmogène, un copolymère greffé de poly(alcool vinylique) - polyéther sous forme d'une dispersion aqueuse, **caractérisé en ce que** la dispersion aqueuse contient, par rapport à la matière sèche,
a) de 10 à 90 % en poids d'un copolymère greffé de poly(alcool vinylique) - polyéther,
b) de 10 à 90 % en poids de poly(acétate de vinyle) et
c) de 0 à 50 % en poids d'adjuvants.

2. Procédé suivant la revendication 1, **caractérisé en ce que** la dispersion aqueuse contient, par rapport à la matière sèche,
a) de 15 à 85 % en poids d'un copolymère greffé de poly(alcool vinylique) - polyéther,
b) de 15 à 85 % en poids de poly(acétate de vinyle) et
c) de 0 à 50 % en poids d'adjuvants.

3. Procédé suivant la revendication 1 ou 2,
**caractérisé en ce que** la dispersion aqueuse contient un poly(acétate de vinyle) ayant une teneur en monomère résiduel de moins de 100 ppm.

4. Agent aqueux de traitement de surface pour denrées alimentaires, contenant de 10 à 90 % en poids, de préférence de 15 à 85 % en poids, d'un copolymère greffé de poly(alcool vinylique) polyéthylène glycol d'un poids moléculaire moyen de 25 000 à 150 000 Dalton et de 10 à 90 % en poids, de préférence de 20 à 85 % en poids, de poly(acétate de vinyle) d'un poids moléculaire moyen de 200 000 à 1 000 000 Dalton, par rapport au poids à sec de l'agent de traitement de surface.

5. Agent de traitement de surface suivant la revendication 4, contenant un poly(acétate de vinyle) ayant une taille moyenne de particules de 50 à < 200 nm.

6. Agent de traitement de surface suivant la revendication 4 ou 5, contenant un poly(acétate de vinyle) ayant une teneur en monomère résiduel de moins de 100 ppm.

7. Denrées alimentaire revêtues d'un film polymère, où le film polymère est composé .
a) de 10 à 90 % en poids d'un copolymère greffé de poly(alcool vinylique) - polyéther,
b) de 10 à 90 % en poids de poly(acétate de vinyle) et
c) de 0 à 50 % en poids d'un ou plusieurs adjuvants.
